# EUROPEAN PATENT SPECIFICATION

(11) **EP 2 771 622 B1**
(45) Date of publication and mention of the grant of the patent: **06.06.2018**
(21) Application number: 12783370.5
(22) Date of filing: 27.09.2012
(51) Int. Cl.: F24H 1/28

(54) **HEAT EXCHANGER FOR THE CONDENSING BOILER**
WÄRMETAUSCHER FÜR EINEN KONDENSATIONSBOILER
ÉCHANGEUR DE CHALEUR POUR CHAUDIÈRE À CONDENSATION

(30) Priority: 29.09.2011 PL 39646011
(43) Date of publication of application: 03.09.2014
(73) Proprietor: AIC S.A., 81-577 Gdynia (PL)
(72) Inventor: PACHOLSKI, Adam, 81-603 Gdynia (PL)
(74) Representative: Kwapich, Anna
(86) International application number: PCT/PL2012/000097
(87) International publication number: WO 2013/048269

(56) References cited:
- EP-A1- 1 398 579
- EP-A2- 0 387 548
- DE-U1- 8 903 017

## Description

The invention concerns a heat exchanger for the condensing boiler. The solution belongs to the pipe exchanger group designed for exchanging heat between gas and fluid. The heat exchanger is applied in heat engineering, particularly in domestic central heating installations.

There are many known types of pipe heat exchangers. Their structure depends on the specific place of their application, the circulating agents participating in the heat exchange, and the specific demands and needs. All pipe heat exchangers of the fluid-gas type share a common feature, namely they all have a system of pipe elements transferring hot gas or liquid, fitted in between two sieve walls inside a chamber enclosed in an outer jacket, where the heated water or gas circulates. In the heat exchangers designated for domestic central heating installations, where the heat is generated by burning gas, heat exchangers are provided with a combustion chamber mounted above the upper sieve wall, and have water inlet and outlet stub pipes, a gas inlet stub pipe, and a fume exhaust stub pipe. In such heat exchangers the set of the pipe elements through which the fumes flow is positioned vertically, and the water heated by the fumes circulates around them. The pipe element set is enclosed in an outer jacket, most frequently cylindrical in shape, which also encases the whole combustion chamber or a part thereof. In known heat exchangers of the type the combustion chamber is also cylindrical in shape with the diameter equal to or smaller than the diameter of the outer jacket. Also known are heat exchangers used in heat engineering, called condensers or liquefiers, composed of a number of pipe element sets installed in a chamber enclosed in an outer jacket. In such exchangers, the pipes are fitted between sieve bottoms, with the water chambers behind them, from where the water is transferred into the pipes to serve as the cooling agent for the steam coming out of the turbine outlets and transferred to the chamber where the pipes are installed. Depending on the type of the pipe heat exchanger, the pipe elements used in the piping systems differ in their diameters and shapes, and may be equipped with different auxiliary elements, such as partitions or additional pipes etc., so as to enhance efficiency of the heat exchange.

Known from the document published under No. DE 8903017 U1 is a heat exchanger for the condensing boiler comprising the features of the preamble of claim 1. The heat exchanger is fitted with liquid, gas and fume inlet and outlet stub pipes, having an outer jacked which encases the combustion chamber mounted in the top section thereof, under which a set of vertical pipe elements is fitted, both ends of which are fixed to the sieve walls, where the top sieve wall serves as the bottom of the combustion chamber and where partitions of any desired shape or number may be fitted crosswise in relation to the pipe elements. The space between the side wall of the combustion chamber and the outer jacket and the space under the combustion chamber where the pipe element set is mounted are mutually connected to form the fluid chamber.

Known from the international patent application published under No. WO2009/078577 is a boiler comprising a cylindrical casing, vertically positioned liquid-gas exchanger, burner installed in the combustion chamber of the exchanger, inlet and outlet of the heated water, fume exhaust duct, gas inlet, fittings which supply the air and appropriately mix it with the gas, as well as control devices. This embodiment of the heat exchanger contains a set of pipe elements rectangular in cross section, regularly distributed between the walls of the outer jacket forming the chamber, through which the heated water flows. The top ends of the pipes are anchored in the flat upper sieve wall under the circular combustion chamber. The pipes, piercing through the flat bottom sieve wall and crossing the exhaust gas recirculation chamber, are linked with their bottom ends to the fume exhaust duct. The water chamber is fitted with flat disc-shaped partitions with openings through which the pipe elements run. These separating partitions disturb water circulation and thus improve heat exchange. They are positioned perpendicular to the pipe elements, and their diameter is smaller than the inner diameter of the heat exchanger jacket to leave some space between the partitions and the jacket for the water to flow. The said specification describes the correlation between the width of this space and water circulation, as well as the water pressure on the partitions. In the described embodiment it is proposed to equip the partitions with circulation pipes to prevent increased water pressure on the partitions, such pipes anchored in the top partition on one end, and in the bottom one on the opposite end. The application also presents a structural variant where some space is left between the pipe element walls and the openings in the partitions through which the pipes run to increase water agitation and improve heat exchange efficiency. The described boiler is equipped with an auxiliary independent water circulation system consisting of spiral pipes installed in the water chamber and coiled around the combustion chamber.

The gas-water heat exchanger designated for a boiler and disclosed in publication EP0926439 has a cylindrical outer jacket encasing a cylindrical combustion chamber with a corrugated side wall, under which a set of vertical pipes is fitted between the top and bottom sieve wall, where the top sieve wall serves as the bottom of the combustion chamber. The pipes of this heat exchanger are the shape similar to a flattened ellipsis in cross section and have different indentations, notches, and cavities on their side walls.

The heat exchanger for the condensing boiler according to the invention, fitted with liquid, gas and fume inlet and outlet stubs, having an outer jacket which encases a combustion chamber mounted in a top section thereof, under which a set of vertical pipe elements is fitted, both ends of which are fixed to a sieve walls, where the top sieve wall serves as the bottom of the combustion chamber and where partitions of any desired shape or number may be fitted crosswise in relation to the pipe elements, where the space between the side wall of the combustion chamber and the outer jacket and the space under the combustion chamber where the pipe element set is mounted are mutually connected to form a fluid chamber is characterised in that the combustion chamber is given the shape of a truncated cone with the diameter decreasing towards the top, and the bottom of the combustion chamber is given the shape of a truncated cone with its diameter decreasing towards the bottom sieve wall..

The bottom of the combustion chamber has an additional centrally positioned bulge pointing downwards.

A flange is formed around the top edge of the side wall of the combustion chamber, with its outer edge permanently connected to the outer jacket.

In a preferable variant, the flange is given the shape of a horizontally positioned ring.

An advantage of the solution according to the invention consists in forcing a uniform flow along the walls of the combustion chamber, as well as in reducing the locally observed resistance occurring during the flow of the heated agent around the combustion chamber.

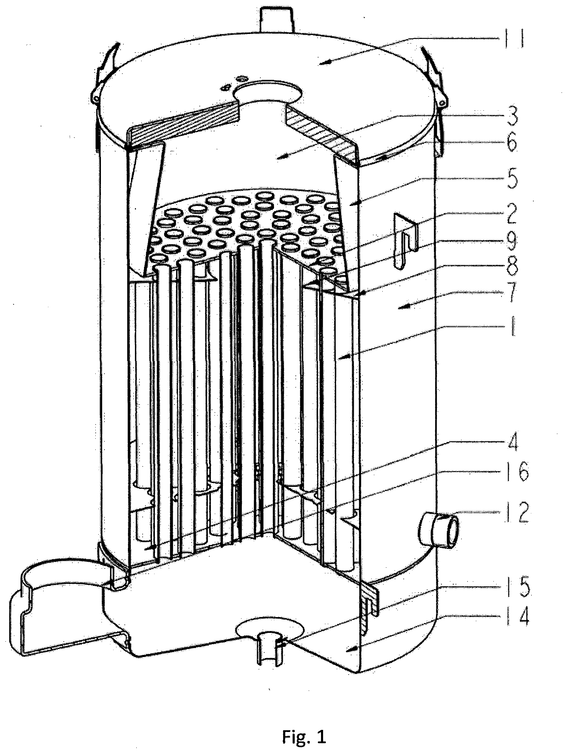

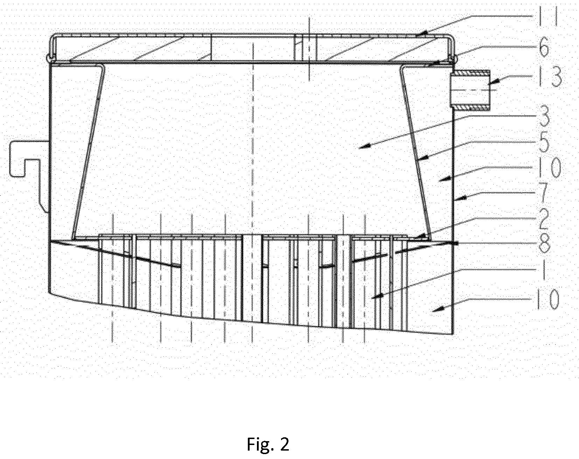

A heat exchanger for the condensing boiler is shown in a drawing, where Fig. 1 presents the inside of the heat exchanger, and Fig. 2 shows the longitudinal section of the top part of the heat exchanger. The heat exchanger shown in the Figures does not fall within the scope of the claims.

The heat exchanger for the condensing boiler consists of a vertically-positioned set of pipe elements 1 circular in section, arranged at equal distances, whose top ends are welded to the upper sieve wall, which at the same time serves as the bottom 2 of the combustion chamber 3, and their bottom ends are welded to the bottom sieve wall 4. In an exemplary embodiment variant the bottom sieve wall 4 is formed into a flat disc. The bottom 2 of the combustion chamber 3 is given the shape of a truncated cone with its diameter decreasing towards the bottom sieve wall 4. In a particularly preferable variant the bottom 2 of the combustion chamber 3 has an additional centrally-positioned bulge pointing downwards, which improves the uniformity of the flow around the combustion chamber 3.. The combustion chamber 3 is made of a steel sheet. The side wall 5 of the combustion chamber 3 is inclined towards the vertical axis of the heat exchanger and formed so as to give the combustion chamber 3 the shape of a truncated cone, the diameter of which reduces towards the top. The top edge of the side wall 5 of the combustion chamber 3 is bent outwards, forming flange 6 in the shape of a horizontal ring, the outer edge of which is welded to the cylindrical outer jacket 7 of the exchanger. A horizontal partition 8, also made of steel sheet, is fitted perpendicular to the set of pipe element 1 in their upper length, immediately under the top sieve wall. The partition 8 is perforated with a number of openings, the diameter of which corresponds with the diameters of the pipe elements 1 running through them. The partition 8 is conical in shape, its apex pointing down. The flare angle of the cone-shaped partition is approximately 130°. A large, centrally positioned opening 9 is cut in the partition 8. The package composed of the pipe element set 1, the sieve walls 2 and 4, and the partition 8, as well as the combustion chamber 3 are encased in the outer jacket 7, where the jacket is permanently connected to the outer edge of the bottom sieve wall 4, outer edge of the partition 8, and outer edge of the flange 6 of the combustion chamber 3. The diameter of the top sieve wall serving as the bottom 2 of the combustion chamber 3 is smaller than the diameter of the outer jacket 7; thus, through a large central opening 9 in the partition, the space where the pipe element set 1 is mounted and the space around the combustion chamber 3 are mutually connected to form the fluid chamber 10. The exchanger is closed from the top with a cover 11 fitted with a gas inlet stub pipe, an opening for the burner with its valve ventilation system, and other mounting elements necessary for the installation of the equipment and the boiler casing which houses the described heat exchanger. The cover 11 is severably connected to the outer jacket 7 and flange 6 of the combustion chamber 3. Water inlet 12 and water outlet 13 stub pipes are installed respectively in the top and bottom sections of the outer jacket 7, and the bottom container 14 formed under the bottom sieve wall is fitted with condensate drain stub pipe 15 and gas fume exhaust stub pipe 16.

The heat exchanger is designed for burning natural gas and propane and thus obtain heat used to heat the water circulating in the central heating installations. The gas burns in the combustion chamber 3 in the top section of the exchanger, then the fumes flow vertically down through the pipe elements 1 passing heat on their way to the water circulating inside the outer jacket 7, between the water inlet 12 and the water outlet 13. When flowing down, the fumes cool down below the dewpoint temperature and accumulate in the bottom container 14, from where they are drained off together with the accumulated condensate, which is a mixture of water and aggressive products of the combustion process, through the condensate drain stub pipe 15 and the gas fume exhaust 16. The heated water circulates outside and around the pipe elements 1, in the direction opposite to the flow of the fumes, i.e. the water is introduced through the water inlet stub pipe 12 at the bottom of the exchanger and flows upwards around the pipe elements 1 and the combustion chamber 3, whereupon it is removed from the heat exchanger through the water outlet stub pipe 13 in the upper section of the exchanger. The desired water flow around the combustion chamber 3 is forced by its conical shape and the partition 8, where the flow is directed through the central opening 9 in the said partition 8.

In the exemplary variant the heat exchanger contains 20 pipe elements, its height is ∼ 600 mm, diameter ∼ 350 mm, and the top diameter of the combustion chamber is ∼300 mm. The maximum temperature guaranteed at the outlet is ∼90°C.

In other embodiment variants, the heat exchanger having a conically-shaped combustion chamber may have a varying number of partitions of various shapes fitted between the lower and top sieve bottoms. The sections and arrangement of pipe elements in the heat exchanger may also differ.

The conical shape of the combustion chamber 3 and the conical shape of its bottom 2 given to it in the particularly preferable variant, additionally complemented with the central bulge, allow for minimising uncontrolled development of areas of different temperatures on the walls of the combustion chamber. Such areas cause substantial stresses in the material of the combustion chamber and in the joints, which reduces the life of the combustion chamber 3, and hence of the whole exchanger. An additional advantage of the solution is the reduction of the locally observed resistance occurring during the flow of the heated agent around the combustion chamber, which reduces the demand for energy necessary to force the circulation of the agent in the heating system. This is due to the shape of the space between the combustion chamber 3 and the outer jacket 7, the volume of which increases in the direction of the flow of the heated agent instantly improving the dynamics of the flow of the heated agent and agitating it, which again is conducive to heat exchange.

## Claims

1. The heat exchanger for the condensing boiler fitted with liquid, gas and fume inlet and outlet stub pipes (12,13,15,16), having an cylindrical outer jacket (7) which encases a combustion chamber (3) mounted in a top section thereof, under which a set of vertical pipe elements (1) is fitted, both ends of which are fixed to a sieve walls, where the top sieve wall serves as the bottom (2) of the combustion chamber (3) and where partitions of any desired shape or number may be fitted crosswise in relation to the pipe elements (1), and the space between the side wall (5) of the combustion chamber (3) and the outer jacket (7) and the space under the combustion chamber (3) where the pipe element set (1) is mounted are mutually connected to form the fluid chamber (10) **characterised in that** the combustion chamber (3) is given the shape of a truncated cone with the diameter decreasing towards the top, and the bottom (2) of the combustion chamber (3) is given the shape of a truncated cone with its diameter decreasing towards the bottom sieve wall (4).

2. The heat exchanger according to Claim 1 **characterised in that** the bottom (2) has an additional centrally positioned bulge pointing downwards.

3. The heat exchanger according to Claim 1 **characterised in that** a flange (6) is formed around the top edge of the side wall (5) of the combustion chamber (3), with its outer edge permanently connected to the outer jacket (7).

4. The heat exchanger according to Claim 3 **characterised in that** the flange (6) is given the shape of a horizontally positioned ring.

## Patentansprüche

1. Wärmetauscher für einen Kondensationsboiler, mit Einlass- und Auslassstutzen für Flüssigkeiten, Gas und Abgas (12, 13, 15, 16), mit dem zylinderförmigen Außenmantel (7), der die in dessen oberen Bereich angeordnete Brennkammer (3) umgibt, unter welcher die vertikalen Rohrelemente (1) angeordnet sind, deren beide Enden an Siebwänden befestigt sind, wobei die obere Siebwand den Boden (2) der Brennkammer (3) bildet; quer zu den Rohrelementen (1) können Trennwände in beliebiger Form angebracht sein und der Raum zwischen der Seitenwand (5) der Brennkammer (3) und dem Außenmantel (7) sowie der Raum unterhalb der Brennkammer (3), wo die Rohrelemente (1) eingebaut sind, miteinander verbunden sind und die Flüssigkeitskammer (10) bilden, **gekennzeichnet dadurch, dass** die Brennkammer (3) die Form eines Kegelstumpfs aufweist, dessen Durchmesser nach oben hin geringer wird und der Boden (2) der Brennkammer (3) die Form eines Kugelstumpfs aufweist, dessen Durchmesser zur unteren Siebwand (4) hin immer geringer wird.

2. Wärmetauscher nach Anspruch 1, **dadurch gekennzeichnet, dass** der Boden (2) eine zentral angeordnete, nach unten zeigende Zusatzwölbung aufweist.

3. Wärmetauscher nach Anspruch 1, **dadurch gekennzeichnet, dass** um die obere Kante der Seitenwand (5) der Brennkammer (3) der Flansch (6) angeordnet ist, der mit dem Außenmantel (7) fest verbunden ist.

4. Wärmetauscher nach Anspruch 3, **dadurch gekennzeichnet, dass** der Flansch (6) die Form eines horizontal angeordneten Rings hat.

## Revendications

1. L'échangeur de chaleur pour chaudière à condensation muni de buses d'entrée et de sortie du liquide, du gaz et des gaz de combustion (12,13,15,16), ayant une enveloppe extérieure cylindrique (7) qui entoure la chambre de combustion (3) installée dans sa partie supérieure, sous laquelle se trouve un assemblage d'éléments tubulaires verticaux (1) dont les deux extrémités sont fixées à des plaques tubulaires, la plaque tubulaire supérieure constituant le fond (2) de la chambre de combustion (3), à travers les éléments tubulaires (1) peuvent être installées des partitions de toute forme souhaitée, et un espace entre la paroi latérale (5) de la chambre de combustion (3) et l'enveloppe extérieure (7) et l'espace sous la chambre de combustion (3), dans lequel l'assemblage d'éléments tubulaires (1) est installé, sont reliés entre eux et forment une chambre de liquide (10), **caractérisé en ce que** la chambre de combustion (3) présente une forme tronconique avec un diamètre diminuant vers le haut, et le fond (2) de la chambre de combustion (3) présente une forme tronconique avec un diamètre diminuant vers la plaque tubulaire inférieure (4).

2. L'échangeur selon la revendication **caractérisé en ce que** le fond (2) a une convexité supplémentaire située centralement, orientée vers le bas.

3. L'échangeur selon la revendication **caractérisé en ce qu'**une bride (6) est formée autour du bord supérieur de la paroi latérale (5) de la chambre de combustion (3) qui, avec son bord extérieur, est connectée solidement à l'enveloppe extérieure (7).

4. L'échangeur selon la revendication 3 **caractérisé en ce que** la bride (6) a la forme d'une bague disposée horizontalement.
